# EUROPEAN PATENT SPECIFICATION

(11) **EP 1 944 633 B1**
(45) Date of publication and mention of the grant of the patent: **28.07.2010**
(21) Application number: 06027105.3
(22) Date of filing: 29.12.2006
(51) Int. Cl.: G02B 6/42, F21V 8/00, G02B 6/00, G02F 1/13357, G02F 1/1335, F21S 2/00, F21V 7/04, F21V 7/05

(54) **Light source structure with reflecting elements of edge-lit backlight module**
Lichtquellenstruktur mit Reflektionselementen von einem kantenbeleuchteten Rückbeleuchtungsmodul
Structure de source lumineuse muni d'éléments réfléchissants pour un module de rétro-éclairage illuminé par la tranche

(43) Date of publication of application: 16.07.2008
(73) Proprietor: Pyroswift Holding Co., Limited, Wanchai Hong Kong (CN)
(72) Inventor: Wang, Pei-Choa, Gueishan Township Taoyuan County (TW)
(74) Representative: Urner, Peter

(56) References cited:
- WO-A-01/57433
- WO-A-99/08042
- WO-A-2004/001287
- US-A- 4 929 866
- US-A1- 2002 006 039
- US-A1- 2006 104 090
- US-A1- 2006 215 387
- US-A1- 2006 256 578

## Description

### 1. Field of the Invention

The present invention relates to a backlight module, and more particular to a backlight module that reflects a light source to a light guide plate by a multiple reflection.

### 2. Description of Prior Art

Since light crystal display (LCD) is not a self-emitting display device, an external light source is mandatory for achieving the display effect. Most liquid crystal displays adopt a backlight module to provide a uniform liquid crystal display panel and a high-brightness light source. The basic principle of the LCD adopts a spot light source or a linear light source, and effectively converts the spot or linear light source into a planar light source to provide a product emitting a planar light source with high brightness and uniform luminance.

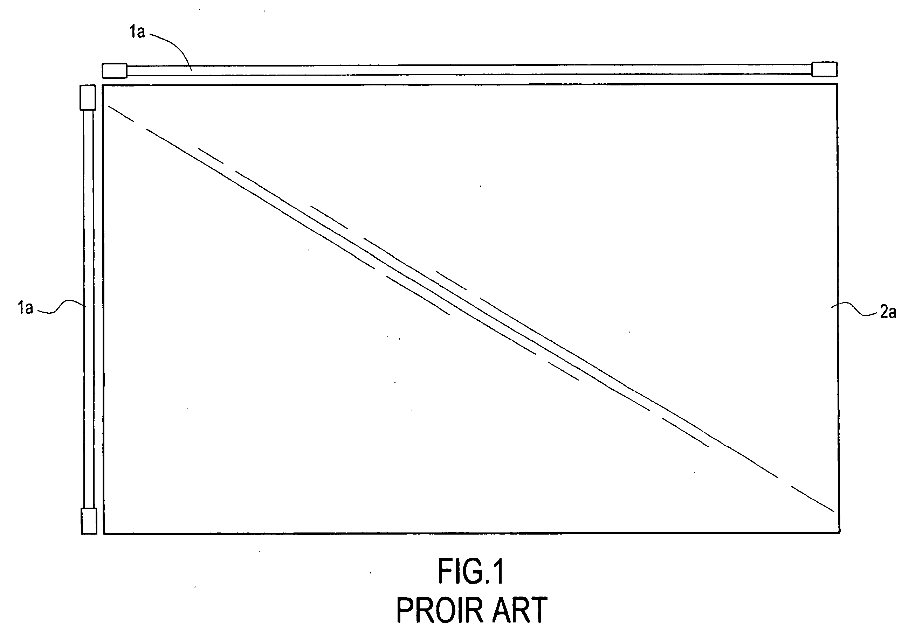

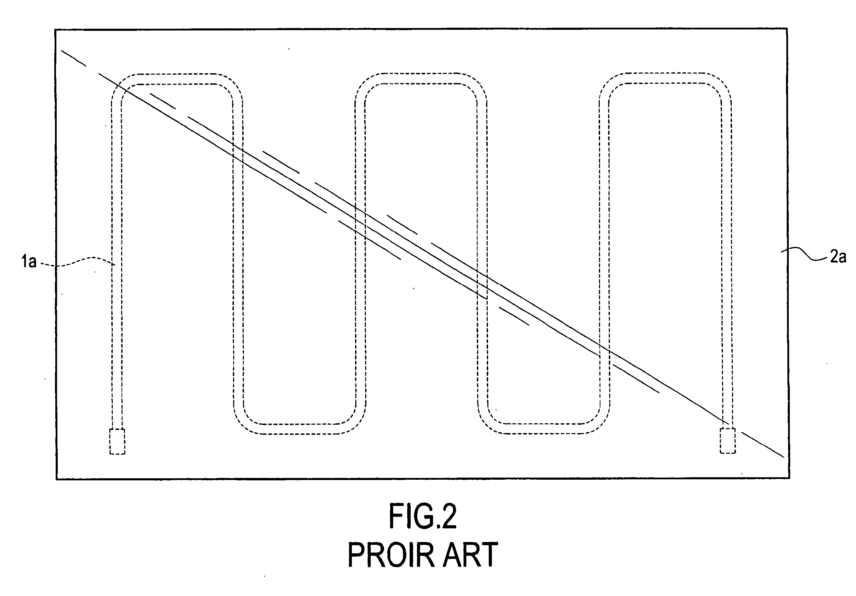

In general, a backlight module can be divided into two types: a front light type and a back light type, and the back light type can be classified and developed into the following structures by their specifications and the positions of the lamps:
1. An edge lighting structure as shown in Fig. 1 sets a cold cathode fluorescent lamp 1a on a lateral side of a light guide plate 2a, and the light guide plate 2a adopts an injection molding printless design and the edge lighting structure is generally used in small or mid-size backlight modules below 18 inches, and an edge lighting light source design comes with a lightweight, thin, narrow-framed, and low power consumption features, and thus it can be used as a light source for mobile phones, personal digital assistants (PDAs) and notebook computers.
2. A bottom light structure as shown in Fig. 2 installs a cold cathode fluorescent lamp 1a at the back of the light guide plate 2a. Due to the super large backlight module, the edge lighting structure no longer maintains its advantages on weight, power consumption and brightness anymore, and thus the bottom light structure that installs the cold cathode fluorescent lamp 1a at the back of the light guide plate 2an is developed. The bottom light structure is applicable for portable LCD monitors and LCD TVs with relaxing requirements.

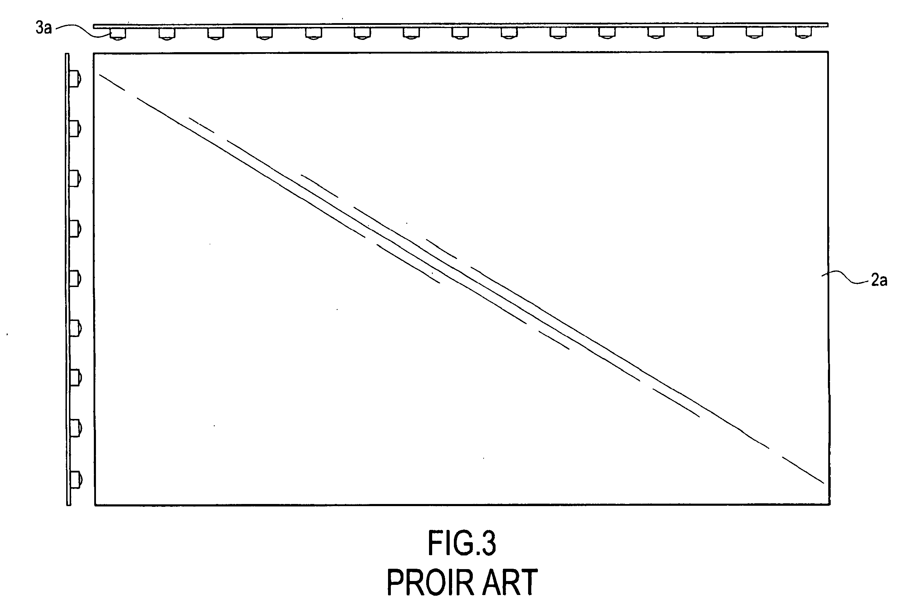

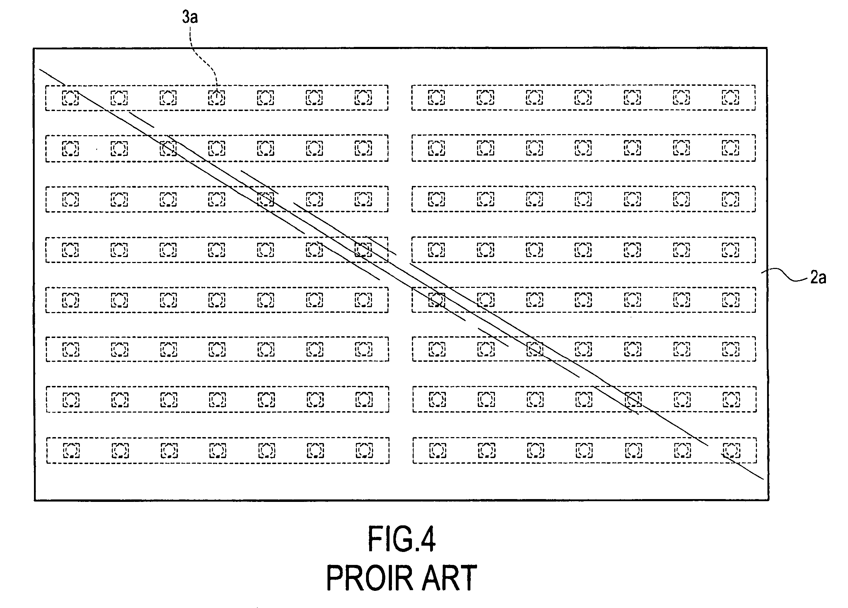

In recent years, light emitting diode (LED) becomes increasingly popular due to its compact size, low power consumption and long life expectancy, and it gradually takes over the traditional light bulb. For instance, LED is used extensively in traffic lights, automobile signal lights, flashlights, mobile phones, lamps and large outdoor billboards. Some light sources of the present backlight modules also adopt LED as a light source, and the LED 3 is usually installed on a lateral side or a backside of the light guide plate 2a as shown in Figs. 3 and 4.

In fact, the heat source produced by an electrically connected LED 3a will affect the light emitting efficiency of the LED, and insufficient heat dissipation will cause the LED 3a unable to meet its specifications. To solve the aforementioned problem, some manufacturers reduce the input current (which is known as load reduction) to 60% of the specified value, so that the brightness of each LED 3a will fall below 60% of the specified value. More light emitting diodes are added to satisfy the brightness requirement, but such arrangement makes the manufacture more complicated and incurs a higher cost.

WO 01/57433 A1 is concerned with a backlight module and discloses a light source structure having a point light source and a wedge-shaped light guide piece. The wedge-shaped light guide piece having a first side surface arranged in parallel and adjacent to a first side surface of a light guide plate of the backlight unit, a second side surface, facing the point light source and a third side surface forming an acute angle with the first side surface. The point light source, the wedge-shaped light guide piece and the light guide plate are provided with a reflecting element, e.g. with a reflecting metal film.

Light generated by the single point light source is coupled into the light guide piece through the second side surface either directly or after being reflected by the reflecting element. Light propagating in the light guide piece will be reflected by the third side surface and/or the light reflecting element covering that side surface into the direction of the light guide plate.

### SUMMARY OF THE INVENTION

Thus, it is an object of the present invention to provide a light source structure of a backlight module that has a reduced number of light emitting diodes and allows the light emitting efficiency of the light emitting diodes to meet the requirements of its specification.

This object is achieved by the light source structure according to claim 1.

According to the present invention, the light source structure reflects light from a light source to a light guide by multiple reflection so that a relative small number of light emitting diodes can be used for generating light that is guided in a spread out manner into a light guide plate.

According to the present invention a casing includes a containing space for accommodating a plurality of light source generators and a reflecting element, and a lateral side of the casing has an opening and an installing slot, and the opening and installing slot are interconnected with the containing space.

A heat sink is comprised of a thermal conducting element and a heat dissipating fin, and the thermal conducting element is installed in the installing slot.

A plurality of light source generators are installed on the thermal conducting element and the light source generators are installed on a substrate through a light emitting component, and the substrate is installed on the thermal conducting element. The thermal conducting element installs a reflector, and the reflector includes a light pipe disposed at an end of the substrate, and the light pipe installs a plurality of corresponding optical lenses therein, and the optical lenses focus the spot light source of the light emitting component to produce an output of a linear light source.

A first reflecting element is installed in the containing space, and the first reflecting element has an oblique surface and a bottom surface perpendicular to a plurality of light source generators, and the thickness between the bottom surface and the oblique surface of the first reflecting element becomes thinner at the position proximate to the opening, such that the oblique surface and the opening are installed corresponding to each other, and the oblique surface can reflect the linear light source guided by the light pipe as a planar light source to be projected outside the casing.

A second reflecting element has an oblique surface disposed corresponding to a side of the light guide plate, an the oblique surface has a protrusion for refracting a continuous light source, such that a light source reflected from the first reflecting element to the second reflecting element can be diffused to achieve a uniform projection of the light source onto the light guide plate.

### BRIEF DESCRIPTION OF DRAWINGS

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 is a schematic view of a first type of conventional backlight module structure;
Fig. 2 is a schematic view of a second type of conventional backlight module structure;
Fig. 3 is a schematic view of a third type of conventional backlight module structure;
Fig. 4 is a schematic view of a fourth type of conventional backlight module structure;
Fig. 5 is a bottom view of a light source structure of the present invention;
Fig. 6 is a cross-sectional view of Section 6-6 as depicted in Fig. 5;
Fig. 7 is a schematic view of an optical path of a light source structure of the present invention;
Fig. 8 is a schematic view of a first preferred embodiment of the present invention;
Fig. 9 is a schematic view of a second preferred embodiment of the present invention;
Fig. 10 is a schematic view of a third preferred embodiment of the present invention;
Fig. 11 is a schematic view of a fourth preferred embodiment of the present invention; and
Fig. 12 is a schematic view of a fifth preferred embodiment of the present invention.

### DETAILED DESCRIPTION OF THE INVENTION

The technical characteristics, features and advantages of the present invention will become apparent in the following detailed description of the preferred embodiments with reference to the accompanying drawings. The drawings are provided for reference and illustration only, but not intended for limiting the present invention.

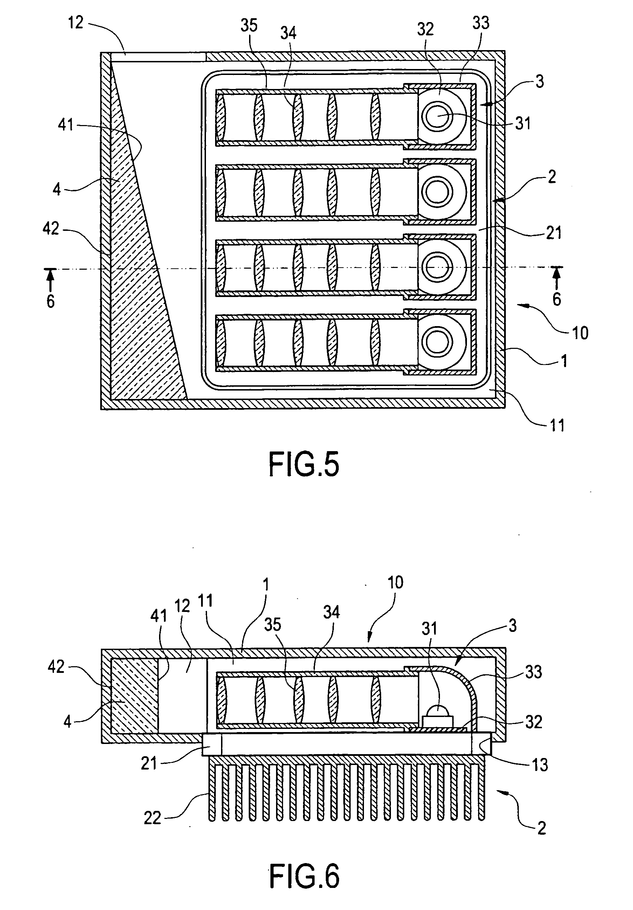

Referring to Figs. 5 and 6 for a bottom view of a light source structure of the invention and a cross-sectional view of Section 6-6 as depicted in Fig. 5 respectively, a light source structure 10 of a backlight module comprises: a casing 1, a heat sink 2, a plurality of light source generators 3 and a first reflecting element 4. The foregoing assembly is a light source structure having a heat dissipating effect and capable of converting a spot light source into a linear light source, and the linear light source into a planar light source to be projected outside the casing 1.

The foregoing casing 1 has a containing space 11 for accommodating a plurality of light source generators 3 and a reflector 33 , and a lateral side of the casing 1 a has an opening 12 and an installing slot 13, and the opening 12 and installing slot 13 are interconnected with the containing space 11.

The heat sink 2 is comprised of a thermal conducting element 21 and a heat dissipating fin 22 attached onto the surface of a thermal conducting element 21 a, and the thermal conducting element 21 is installed on the installing slot 13. In the figures, the thermal conducting element 21 is a heat spread or a heat conducting module.

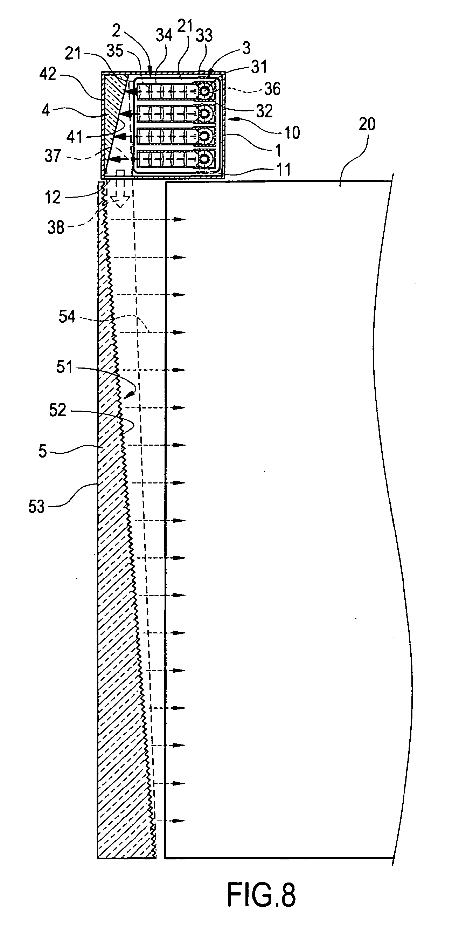

The plurality of light source generators 3 are installed on the thermal conducting element 21, and each light source generator 3 installs a light emitting component 31 on a substrate 32, and then installs the substrate 32 on the thermal conducting element 21. The thermal conducting element 21 installs a reflector 33 covered onto the light emitting component 31. A light pipe 34 is installed at an end where the reflector 33 and the substrate 32 are connected, and the light pipe 34 is interconnected with the reflector 33 and installs a plurality of corresponding optical lenses 35 for focusing a spot light source of the light emitting component 31 to produce an output of a linear light source. In the figures, the light emitting component 31 is a light emitting diode (LED), and the light source produced by the light emitting component 31 is transmitted from the first reflecting element 4 to the second reflecting element 5 (as shown in Fig. 8), and then to the light guide plate (not shown in the figure). The shorter the optical path, the smaller is the number of watts used for the light emitting diode (indicating a lower brightness). The longer the optical path, the larger is the number of watts used for the light emitting diode (indicating a higher brightness). In addition, the optical lens 35 is a convex lens.

The first reflecting element 4 is installed in the containing space 11, and the first reflecting element 4 includes an oblique surface 41 and a bottom surface 42 perpendicular to the plurality of light source generators 3, and the thinner end between the bottom surface 42 and the oblique surface 41 of the first reflecting element 4 is disposed proximate to the opening 12, such that the oblique surface 41 and the opening 12 are disposed corresponding to each other, and the oblique surface 41 also can reflect the linear light source guided by the light pipe 34 as a planar light source to the outside of the casing 1. In the figures, the first reflecting element 4 is a right-angled triangular body.

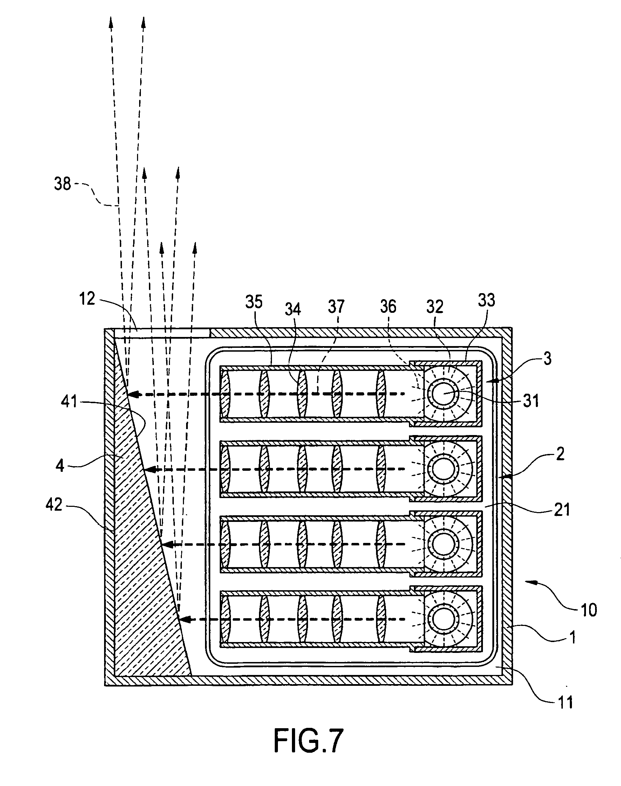

Referring to Fig. 7 for a schematic view of an optical path of a light source structure of the present invention, if the light emitting component 31 of the light source structure 10 is lit, the reflector 33 will reflect, focus and convert the spot light source 36 of the light emitting component 31 into a linear light source 37 by the optical lenses 35 in the light pipe 3, and the linear light source 37 will be projected onto the oblique surface 41 of the first reflecting element 4, and the oblique surface 41 will convert the linear light source 37 into a planar light source 38 to be projected outside the casing 1 through the opening 12.

If the light emitting component 31 is lit, the produced heat source will be absorbed directly by the thermal conducting element 21 of the heat sink 2 and transmitted to the heat dissipating fin 22 and dissipated from the heat dissipating fin 22 to the outside. The light emitting component 31 can dissipate heat effectively, so that the light emitting efficiency of the light emitting component 31 can meet the requirement of its specification and also extend the life expectancy of the light emitting component 31.

Referring to Fig. 8 for a schematic view of a first preferred embodiment of the present invention, a small backlight module comprises: a light guide plate 20 and a light source structure 10 installed on a lateral side of the light guide plate 20a. The light source structure 10 further comprises a second reflecting element 5 installed on a lateral side of the light guide plate 20a, and the second reflecting element 5 has an oblique surface 51 disposed corresponding to a lateral side of the light guide plate 20a, and the oblique surface 51 has a protrusion 52 for refracting a continuous light source, such that the light source can be diffused to achieve a uniform light source. A thin end between the bottom surface 53 and the oblique surface 51 of the second reflecting element 5 is disposed proximate to the opening 12, such that the oblique surface 51 and the opening 12 correspond to each other. In the figure, the second reflecting element 5 is a right-angled triangular body.

If the light emitting component 31 of the light source structure 10 is lit, the reflector 33 will reflect the spot light source 36 of the light emitting component 31, and then the optical lenses 35 in the light pipe 34 will focus and convert the spot light source 36 into a linear light source 37 to be projected onto an oblique surface 41 of the first reflecting element 4, and then the oblique surface 41 will convert the linear light source 37 into a planar light source 38 to be projected onto an oblique surface 51 of the second reflecting element 5 through the opening 12, and the oblique surface 51 will guide the planar light source 54 into the light guide plate 20 for diffusing the light uniformly in the light guide plate 20.

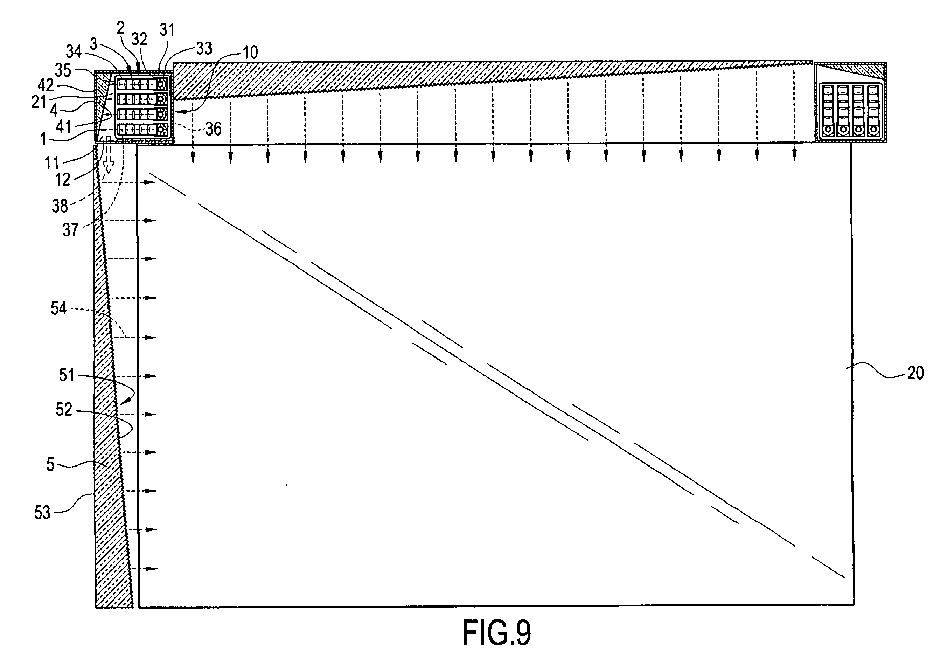

Referring to Fig. 9 for a second preferred embodiment of the present invention, a backlight module is substantially the same as that illustrated in Fig. 8, and the difference resides on that the second preferred embodiment has a plurality of light source structures 10. During the transmission of a light source, the brightness of the light guide plate 20 at a farther distance from the light source is insufficient, and thus another light source structure 10 is usually added to the light guide plate 20. If the light emitting component 31 of the light source structure 10 is lit, the reflector 33 will reflect the spot light source 36 of the light emitting component 31, and then the optical lenses 35 in the light pipe 34 will focus and convert the spot light source 36 into a linear light source 37 to be projected onto the oblique surface 41 of the first reflecting element 4, and then the oblique surface 41 will convert the linear light source 37 into a planar light source 38 to be projected onto the oblique surface 51 of the second reflecting element 5 through the opening 12. The oblique surface 51 guides the planar light source 54 into the light guide plate 20 and allows the light inside the light guide plate 20 to be diffused uniformly, such that the light guide plate 20 can show sufficient brightness.

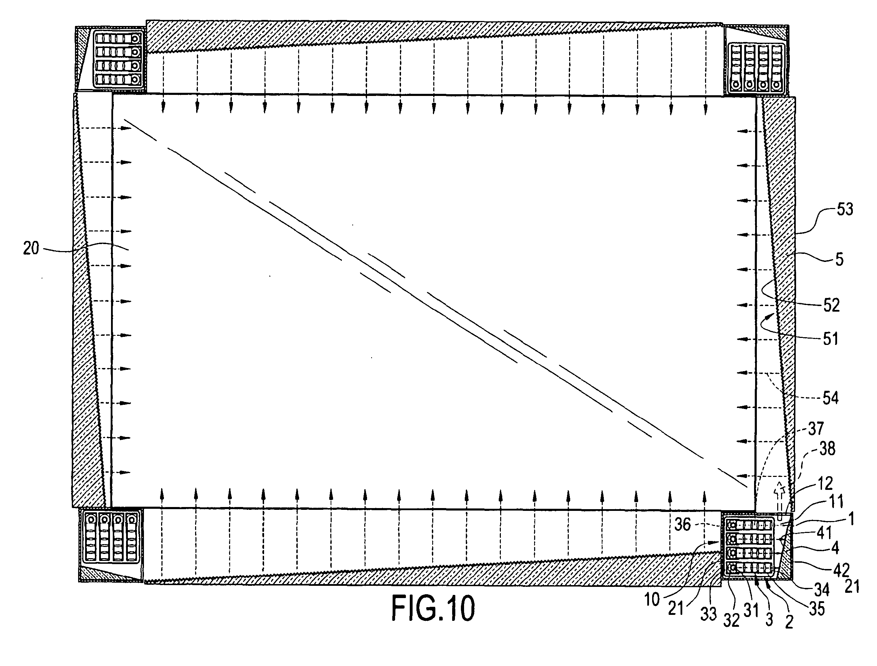

Referring to Fig. 10 for a third preferred embodiment of the present invention, a large backlight module installs a light source structure 10 at each of the four sides of the light guide plate 20, such that if the light emitting component 31 is lit, the reflector 33 will reflect the spot light source 36 of the light emitting component 31, and then the optical lenses 35 in the light pipe 34 will focus and convert the spot light source 36 into a linear light source 37 to be projected onto the oblique surface 41 of the first reflecting element 4, and the oblique surface 41 will convert the linear light source 37 into a planar light source 38 to be projected onto the oblique surface 51 of the second reflecting element 5 through the opening 12, and then the oblique surface 51 will guide the planar light source 54 into the light guide plate 20, such that the light inside the light guide plate 20 can be diffused uniformly, and the large light guide plate 20 can show sufficient brightness.

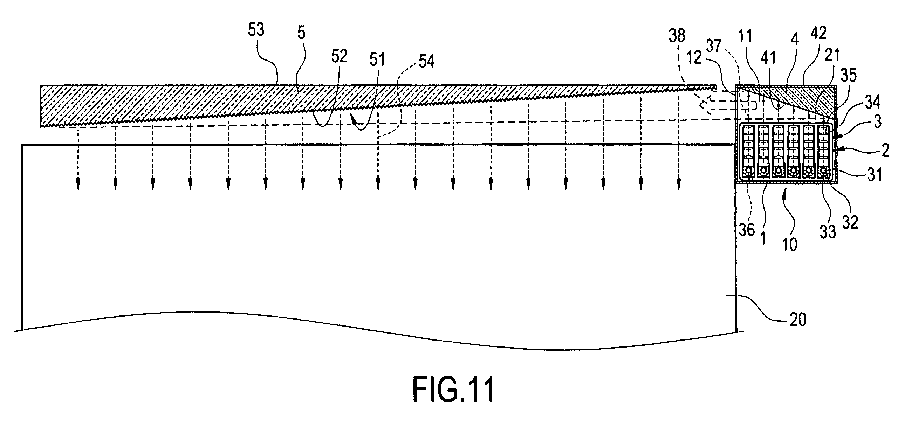

Referring to Fig. 11 for a fourth preferred embodiment of the present invention, a large backlight module installs a light source structure 10 at each side of the light guide plate 20, and adds a plurality of light source generators 3 in the light source structure 10, and the light source produced by the light emitting component 31 is transmitted from the first reflecting element 4 to the second reflecting element 5, and then to the light guide plate 20. The shorter the optical path, the smaller is the number of watts used for the light emitting diode (indicating a lower brightness). The longer the optical path, the larger is the number of watts used for the light emitting diode (indicating a higher brightness).

If the light emitting component 31 is lit, the reflector 33 will reflect the spot light source 36 of the light emitting component 31, and the optical lens 35 in the light pipe 34 will focus and convert the spot light source 36 into a linear light source 37 to be projected onto the oblique surface 41 of the first reflecting element 4, and the oblique surface 41 will convert the linear light source 37 into a planar light source 38 to be projected onto the oblique surface 51 of the second reflecting element 5 through the opening 12, and the oblique surface 51 will guide the planar light source 54 into the light guide plate 20, such that the light inside the light guide plate 20 can be diffused uniformly to allow the large light guide plate 20 to show sufficient brightness.

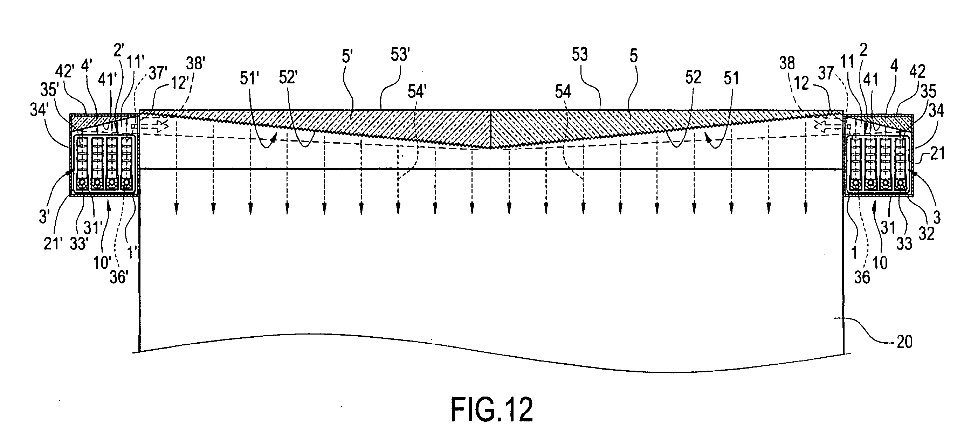

Referring to Fig. 12 for a fifth preferred embodiment of the present invention, a large backlight module can install a light source structure 10, 10' on both lateral sides of the light guide plate 20. If the light emitting component 31, 31' of the light source generator 3, 3' is lit, the reflector 33, 33' will reflect the spot light source 36, 63' of the light emitting component 31, 31', and the optical lenses 35, 35' in the light pipe 34, 34' will focus and convert the spot light source 36, 36' into a linear light source 37, 37' to be projected onto the oblique surface 41, 41' of the first reflecting element 4, 4', and the oblique surface 41, 41 ' will convert the linear light source 37, 37' into a planar light source 38, 38' to be projected onto the oblique surface 51, 51' of the second reflecting element 5, 5' outside the casing 1, 1' through the opening 12, 12', and the oblique surface 51, 51' will guide the planar light source 54, 54' into the light guide plate 20, such that the light inside the light guide plate 20 can be diffused uniformly to allow the large light guide plate 20 to show sufficient brightness.

## Claims

1. A light source structure (10) of backlight module, installed on a lateral side of a light guide plate (20), comprising:
- a casing (1), installed on a side of the light guide plate (20), and having a containing space (11) therein, and an opening (12) disposed on a lateral side of the casing (1) and interconnected with the containing space (11);
- a plurality of light source generators (3), installed in the containing space (11), each light source generator (3) being installed onto a substrate (32) through a light emitting component (31), a reflector (33) being installed on the light emitting component (31), and a light pipe (34) being connected to an end where the reflector (33) and the substrate (32) are connected;
- a first reflecting element (4), installed in the containing space (11), and having an oblique surface (41) and a bottom surface (42) perpendicular to the plurality of light source generators (3) such that the thinner end between the bottom surface (42) and the oblique surface (41) of the first reflective element (4) is disposed proximate the opening (12), and the oblique surface (41) of the first reflecting element (4) disposed corresponding to the opening (12);
- a second reflecting element (5), installed on a lateral side of the light guide plate (20), and having an oblique surface (51) disposed corresponding to the light guide plate (20), and the oblique surface (51) of the second reflecting element (5) disposed corresponding to the opening (12);
- wherein, the light pipe (34) focuses and converts the spot light source (36) of the light emitting component (31) into a linear light source (37) to be projected onto the oblique surface (41) of the first reflecting element (4), and the oblique surface (41) converts the linear light source (37) into a planar light source (38) to be projected onto the oblique surface (51) of the second reflecting element (5) through the opening (12), and the oblique surface (51) of the second reflecting element (5) guides the planar light source (54) into the light guide plate (20).

2. The light source structure (10) of backlight module as recited in claim 1, wherein the light emitting component (31) is a light emitting diode.

3. The light source structure (10) of backlight module as recited in claim 1, wherein the light source produced by the light emitting component (31) is guided from the first reflecting element (4) to the second reflecting element (5), and then to the light guide plate (20); the shorter the traveling distance of the light, the smaller is the number of watts used for the light emitting diode; and the longer the traveling distance of the light, the larger is the number of watts used in the light emitting diode.

4. The light source structure (10) of backlight module as recited in claim 1, wherein the light pipe (34) installs a plurality of corresponding optical lenses (35) therein.

5. The light source structure (10) of backlight module as recited in claim 4, wherein the optical lens (35) is a convex lens.

6. The light source structure (10) of backlight module as recited in claim 1, wherein the first reflecting element (4) is a right-angled triangular body.

7. The light source structure (10) of backlight module as recited in claim 1, wherein the oblique surface (41) of the first reflecting element (4) reflects the linear light source (37) guided by the light pipe (34) and converts the linear light source (37) into a planar light source (38) to be projected outside the casing (1).

8. The light source structure (10) of backlight module as recited in claim 1, wherein the oblique surface (51) of the second reflecting element (5) has a protrusion (52) for refracting a continuous light.

9. The light source structure (10) of backlight module as recited in claim 1, wherein the second reflecting element (5) is a right-angled triangular body.

10. The light source structure (10) of backlight module as recited in claim 1, wherein the casing (1) includes an installing slot (13) disposed on a lateral side of the casing (1), and a heat sink (2) is installed into the installing slot (13).

11. The light source structure (10) of backlight module as recited in claim 10, wherein the heat sink (2) includes a thermal conducting element coupled with the installing slot, and a surface of the thermal conducting element (21) is in contact with the substrate (32) of the light emitting component (31).

12. The light source structure (10) of backlight module as recited in claim 11, wherein the thermal conducting element (21) includes a heat dissipating fin (22) attached on another surface of the thermal conducting element (21).

13. The light source structure (10) of backlight module as recited in claim 11, wherein the thermal conducting element (21) is a heat spread.

14. The light source structure (10) of backlight module as recited in claim 11, wherein the thermal conducting element (21) is a thermal conducting module.

## Patentansprüche

1. Lichtquellenstruktur (10) eines Hintergrundbeleuchtungsmoduls, die an einer lateralen Seite einer Lichtleiterplatte (20) angebracht ist, umfassend:
ein Gehäuse (1), das an einer Seite der Lichtleiterplatte (20) angebracht ist, mit einem Aufnahmeraum (11) darin und einer Öffnung (12), die auf einer lateralen Seite des Gehäuses (1) angeordnet ist und mit dem Aufnahmeraum (11) verbunden ist;
eine Vielzahl von Lichtquellenerzeugern (3), die im Aufnahmeraum (11) angebracht sind, wobei jeder Lichtquellenerzeuger (3) auf einem Substrat (32) durch ein Licht emittierendes Bauelement (31) angebracht ist, wobei ein Reflektor (33) am Licht emittierenden Bauelement (31) angebracht ist und ein Lichtleiter (34) mit einem Ende verbunden ist, wo der Reflektor (33) und das Substrat (32) verbunden sind;
ein erstes reflektierendes Element (4), das im Aufnahmeraum (11) angebracht ist und eine schräge Oberfläche (41) und eine senkrecht zu der Vielzahl von Lichtquellenerzeugern (3) stehende Grundfläche (42) aufweist, so dass das dünnere Ende zwischen der Grundfläche (42) und der schrägen Oberfläche (41) des ersten reflektierenden Elements (4) benachbart zur Öffnung (12) angeordnet ist und die schräge Oberfläche (41) des ersten reflektierenden Elements (4) entsprechend zur Öffnung (12) angeordnet ist;
ein zweites reflektierendes Element (5), das an einer lateralen Seite der Lichtleiterplatte (20) angebracht ist und eine schräge Oberfläche (51) aufweist, die entsprechend der Lichtleiterplatte (20) angeordnet ist, wobei die schräge Oberfläche (51) des zweiten reflektierenden Elements (5) entsprechend der Öffnung (12) angeordnet ist;
wobei der Lichtleiter (34) die Punktlichtquelle (36) des Licht emittierenden Bauelements (31) fokussiert und in eine lineare Lichtquelle (37) umwandelt, die auf die schräge Oberfläche (41) des ersten reflektierenden Elements (4) zu projizieren ist, und die schräge Oberfläche (41) die lineare Lichtquelle (37) in eine ebene Lichtquelle (38) umwandelt, die auf die schräge Oberfläche (51) des zweiten reflektierenden Elements (5) durch die Öffnung (12) zu projizieren ist, und die schräge Oberfläche (51) des zweiten reflektierenden Elements (5) die ebene Lichtquelle (54) in die Lichtleiterplatte (20) leitet.

2. Lichtquellenstruktur (10) eines Hintergrundbeleuchtungsmoduls nach Anspruch 1, wobei das Licht emittierende Bauelement (31) eine Licht emittierende Diode ist.

3. Lichtquellenstruktur (10) eines Hintergrundbeleuchtungsmoduls nach Anspruch 1, wobei die vom Licht emittierenden Bauelement (31) erzeugte Lichtquelle vom ersten reflektierenden Element (4) zum zweiten reflektierenden Element (5) und dann zur Lichtleiterplatte (20) geleitet wird, wobei die für die Licht emittierende Diode verbrauchte Wattzahl umso kleiner ist, je kürzer die Laufstrecke des Lichts ist, und die in der Licht emittierenden Diode verbrauchte Wattzahl umso größer ist, je länger die Laufstrecke des Lichts ist.

4. Lichtquellenstruktur (10) eines Hintergrundbeleuchtungsmoduls nach Anspruch 1, wobei der Lichtleiter (34) eine Vielzahl von entsprechenden optischen Linsen (35) darin befestigt.

5. Lichtquellenstruktur (10) eines Hintergrundbeleuchtungsmoduls nach Anspruch 4, wobei die optische Linse (35) eine Konvexlinse ist.

6. Lichtquellenstruktur (10) eines Hintergrundbeleuchtungsmoduls nach Anspruch 1, wobei das erste reflektierende Element (4) ein rechtwinklig dreieckiger Körper ist.

7. Lichtquellenstruktur (10) eines Hintergrundbeleuchtungsmoduls nach Anspruch 1, wobei die schräge Oberfläche (41) des ersten reflektierenden Elements (4) die vom Lichtleiter (34) geführte lineare Lichtquelle (37) reflektiert und die lineare Lichtquelle (37) in eine ebene Lichtquelle (38) umwandelt, die außerhalb des Gehäuses (1) zu projizieren ist.

8. Lichtquellenstruktur (10) eines Hintergrundbeleuchtungsmoduls nach Anspruch 1, wobei die schräge Oberfläche (51) des zweiten reflektierenden Elements (5) einen Vorsprung (52) aufweist, um kontinuierliches Licht zu brechen.

9. Lichtquellenstruktur (10) eines Hintergrundbeleuchtungsmoduls nach Anspruch 1, wobei das zweite reflektierende Element (5) ein rechtwinklig dreieckiger Körper ist.

10. Lichtquellenstruktur (10) eines Hintergrundbeleuchtungsmoduls nach Anspruch 1, wobei das Gehäuse (1) einen Montageschlitz (13) umfasst, der an einer lateralen Seite des Gehäuses (1) angeordnet ist, und ein Kühlkörper (2) im Montageschlitz (13) angebracht ist.

11. Lichtquellenstruktur (10) eines Hintergrundbeleuchtungsmoduls nach Anspruch 10, wobei der Kühlkörper (2) ein wärmeleitendes Element (21) umfasst, das mit dem Montageschlitz (13) gekoppelt ist, und eine Oberfläche des wärmeleitenden Elements (21) in Kontakt mit dem Substrat (32) des Licht emittierenden Bauelements (31) steht.

12. Lichtquellenstruktur (10) eines Hintergrundbeleuchtungsmoduls nach Anspruch 11, wobei das wärmeleitende Element (21) eine wärmeableitende Lamelle (22) umfasst, die auf einer anderen Oberfläche des wärmeleitenden Elements (21) angebracht ist.

13. Lichtquellenstruktur (10) eines Hintergrundbeleuchtungsmoduls nach Anspruch 11, wobei das wärmeleitende Element (21) eine Wärmeableitung ist.

14. Lichtquellenstruktur (10) eines Hintergrundbeleuchtungsmoduls nach Anspruch 11, wobei das wärmeleitende Element (21) ein wärmeleitendes Modul ist.

## Revendications

1. Structure de source lumineuse (10) d'un module de rétroéclairage, installée sur un côté latéral d'une plaque guide-lumière (20), comprenant :
- un boîtier (1) installé sur un côté de la plaque guide-lumière (20) et ayant un espace contenant (11) à l'intérieur, et une ouverture (12) disposée sur un côté latéral du boîtier (1) et interconnectée avec l'espace contenant (11) ;
- une pluralité de générateurs de sources lumineuses (3), installés dans l'espace contenant (11), chaque générateur de source lumineuse (3) étant installé sur un substrat (32) à travers un composant émetteur de lumière (31), un réflecteur (33) étant installé sur le composant émetteur de lumière (31), et un tube guide-lumière (34) étant connecté à une extrémité à laquelle le réflecteur (33) et le substrat (32) sont connectés,
- un premier élément réfléchissant (4), installé dans l'espace contenant (11) et ayant une surface oblique (41) et une surface inférieure (42) perpendiculaire à la pluralité de générateurs de source de lumière (3), de sorte que l'extrémité plus mince entre la surface inférieure (42) et la surface oblique (41) du premier élément réfléchissant (4) est disposée à proximité de l'ouverture (12), et la surface oblique (41) du premier élément réfléchissant (4) est disposée en correspondance de l'ouverture (12) ;
- un second élément réfléchissant (5), installé sur un côté latéral de la plaque guide-lumière (20) et ayant une surface oblique (51) disposée en correspondance de la plaque guide-lumière (20), et la surface oblique (51) du second élément réfléchissant (5) est disposée en correspondance de l'ouverture (12) ;
- dans laquelle le tube guide-lumière (34) focalise et convertit la source lumineuse ponctuelle (36) du composant émetteur de lumière (31) en une source lumineuse linéaire (37) à projeter sur la surface oblique (41) du premier élément réfléchissant (4), et la surface oblique (41) convertit la source lumineuse linéaire (37) en une source lumineuse planaire (38) à projeter sur la surface oblique (51) du second élément réfléchissant (5) à travers l'ouverture (12), et la surface oblique (51) du second élément réfléchissant (5) guide la source lumineuse planaire (54) à l'entrée dans la plaque guide-lumière (20).

2. Structure de source lumineuse (10) d'un module de rétroéclairage selon la revendication 1, dans laquelle le composant émetteur de lumière (31) est une diode électroluminescente.

3. Structure de source lumineuse (10) d'un module de rétroéclairage selon la revendication 1, dans laquelle la source de lumineuse produite par le composant émetteur de lumière (31) est guidée depuis le premier élément réfléchissant (4) vers le second élément réfléchissant (5), et ensuite vers la plaque guide-lumière (20), de sorte de que plus la distance de parcours de la lumière est courte plus faible sera le nombre de watts utilisés pour la diode électroluminescente, et que plus la distance de parcours de la lumière est longue plus élevé sera le nombre de watts utilisés dans la diode électroluminescente.

4. Structure de source lumineuse (10) d'un module de rétroéclairage selon la revendication 1, dans laquelle le tube guide lumière (34) comprend une pluralité de lentilles optiques (35) correspondantes installées à l'intérieur.

5. Structure de source lumineuse (10) d'un module de rétroéclairage selon la revendication 4, dans laquelle la lentille optique (35) est une lentille convexe.

6. Structure de source lumineuse (10) d'un module de rétroéclairage selon la revendication 1, dans laquelle le premier élément réfléchissant (4) est un corps triangulaire à angle droit.

7. Structure de source lumineuse (10) d'un module de rétroéclairage selon la revendication 1, dans laquelle la surface oblique (41) du premier élément réfléchissant (4) réfléchit la source lumineuse linéaire (37) guidée par le tube guide-lumière (34) et convertit la source lumineuse linéaire (37) en une source de lumière planaire (38) à projeter à l'extérieur du boîtier (1).

8. Structure de source lumineuse (10) d'un module de rétroéclairage selon la revendication 1, dans laquelle la surface oblique (51) du second élément réfléchissant (5) comprend une projection (52) pour provoquer la réfraction d'une lumière continue.

9. Structure de source lumineuse (10) d'un module de rétroéclairage selon la revendication 1, dans laquelle le second élément réfléchissant (5) est un corps triangulaire à angle droit.

10. Structure de source lumineuse (10) d'un module de rétroéclairage selon la revendication 1, dans laquelle le boîtier (1) inclut une fente d'installation (13) disposée sur un côté latéral du boîtier (1), et un puits de chaleur (2) est installé dans la fente d'installation (13).

11. Structure de source lumineuse (10) d'un module de rétroéclairage selon la revendication 10, dans laquelle le puits de chaleur (2) inclut un élément thermiquement conducteur couplé à la fente d'installation, et une surface de l'élément thermiquement conducteur (21) est en contact avec le substrat (32) du composant émetteur de lumière (31).

12. Structure de source lumineuse (10) d'un module de rétroéclairage selon la revendication 11, dans laquelle l'élément thermiquement conducteur (21) inclut une ailette de dissipation de chaleur (21) disposée sur une autre surface de l'élément thermiquement conducteur (21).

13. Structure de source lumineuse (10) d'un module de rétroéclairage selon la revendication 11, dans laquelle l'élément thermiquement conducteur (21) est un élément assurant un étalement de la chaleur.

14. Structure de source lumineuse (10) d'un module de rétroéclairage selon la revendication 11, dans laquelle l'élément thermiquement conducteur (21) est un module thermiquement conducteur.
